# EUROPEAN PATENT SPECIFICATION

(11) **EP 1 534 761 B1**
(45) Date of publication and mention of the grant of the patent: **05.04.2006**
(21) Application number: 03791693.9
(22) Date of filing: 20.08.2003
(51) Int. Cl.: C08F 220/04, C08F 220/64, C08F 289/00, C09D 133/02, C09D 11/10

(54) **ROSIN-FATTY ACID VINYLIC POLYMER COMPOSITIONS**
KOLOPHONIUM-FETTSAÜRE VINYL POLYMER ZUSAMMENSETZUNGEN
COMPOSITIONS POLYMERES VINYLIQUES COLOPHANE-ACIDE GRAS

(30) Priority: 27.08.2002 US 228910
(43) Date of publication of application: 01.06.2005
(73) Proprietor: MeadWestvaco Corporation, Stamford, CT 06905 (US)
(72) Inventor: HUTTER, G, Frederick, Charleston, SC 29407 (US); MOISA, Marc, S, Charleston, SC 29414 (US)
(74) Representative: Hepworth, John Malcolm
(86) International application number: PCT/US2003/025919
(87) International publication number: WO 2004/020489

(56) References cited:
- EP-A- 0 994 123

## Description

### FIELD OF INVENTION

This invention relates to novel rosin-fatty acid vinylic polymer compositions and the process for preparing them. In particular, the invention relates to novel rosin-fatty acid vinylic polymer compositions that exhibit properties which make them useful as components of paper sizes, as components of coatings, and as support resins for producing polymer latices that can be employed in formulating water-based coatings and inks. More particularly, these rosin-fatty acid vinylic polymer compositions are mixtures that are produced by the addition polymerization reaction of vinylic monomers in the presence of saturated fatty acids, hydrogenated dimer acids, hydrogenated rosins, or mixtures thereof.

### BACKGROUND OF THE INVENTION

Acrylic polymers of moderate molecular weight which are soluble in aqueous bases are widely used in a number of applications, including paper sizes, pigment dispersants, gloss enhancers for water-based coatings and inks, and as support resins for emulsion polymerizations. The manufacture of such acrylic polymers has traditionally involved the use of volatile organic solvents that are removed by distillation when the formation of the polymer is complete. The organic solvents, which are usually toxic or flammable or both, must then be either recycled of disposed of in an environmentally acceptable manner.

U. S. Patent No. 6,437,033 B1 teaches the preparation of rosin-fatty acid vinylic polymer compositions via a polymerization method which does not require the use of hydrocarbon solvents. However, a problem exists with the use of these compositions in many sizing or coating applications in that the presence of the rosin and/or fatty acid imparts a yellowish or brownish color to the polymer, whereas traditional acrylic polymers are almost water-white. Another shortcoming is that the use of support resins based on unsaturated fatty acids yields latices with relatively high levels of residual monomers. Such high levels of residuals can cause a latex to have a strong odor that many potential users of the latex find objectionable.

Therefore, an object of this invention is to solve these major problems by disclosing a method of producing rosin-fatty acid vinylic polymer compositions.

Another object of this invention is to disclose rosin-fatty acid vinylic polymer compositions which exhibit enhanced color characteristics.

A further object of this invention is to disclose rosin-fatty acid vinylic polymer compositions which exhibit properties that make them useful as support resins in water-based ink, overprint, and other coating applications.

### SUMMARY OF THE INVENTION

The objects of this invention are met via a method that employs saturated fatty acids, hydrogenated dimer acids, hydrogenated rosins, or mixtures thereof to act as solvents in the polymerization reaction of the acrylic and/or styrenic monomers, thereby producing rosin-fatty acid vinylic polymer compositions that are useful as support resins in water-based ink, overprint, and other coating applications. As this method does not require the use of hydrocarbon solvents, the need for solvent stripping is eliminated. The present polymer compositions also have substantially lighter colors than the polymers produced by the method taught in U.S. Patent No. 6,437,033 B1, and are, therefore, better suited for use in various coatings and paper size applications. Furthermore, the present polymer compositions are useful as support resins in emulsion polymerizations, as the resultant emulsions contain relatively low levels of residual monomer.

### DESCRIPTION OF THE PREFERRED EMBODIMENT

The method for producing rosin-fatty acid vinylic polymer compositions comprises reacting in a free-radical addition polymerization reaction:
(A) about 40.0% to about 80.0% by total weight of the reactants of a monomer mixture comprising:
   (1) about 15.0% to about 45.0% by total weight of the monomer mixture of a member selected from the group consisting of acrylic acid, methacrylic acid, fumaric acid, maleic anhydride, itaconic acid, and combinations thereof,
   (2) about 55.0% to about 85.0% by total weight of the monomer mixture of a member selected from the group consisting of non-carboxylic acid-containing vinylic monomers and combinations thereof,
   (3) a catalytic amount of polymerization initiator, and
   (4) up to about 4.0% by total weight of the monomer mixture of chain transfer agent; and
(B) about 20.0% to about 60.0% by total weight of the reactants of a carboxylic acid mixture comprising:
   (1) about 30.0% to about 100.0% by total weight of the carboxylic acid mixture of a member selected from the group consisting of saturated fatty acids, hydrogenated dimer acids, hydrogenated rosins, and combinations thereof,
   (2) up to about 70.0% by total weight of the carboxylic acid mixture of a member selected from the group consisting of rosins, unsaturated fatty acids, and combinations thereof, and
   (3) up to about 0.1 % by total weight of the carboxylic acid mixture of bleaching agent;
at a temperature in the range of about 135°C to about 220°C to produce a rosin-fatty acid vinylic polymer composition having a weight average molecular weight in the range of about 4,000 to about 20,000 and an acid number in the range of about 160 to about 260.

A preferred method for producing rosin-fatty acid vinylic polymer compositions comprises reacting in a free-radical addition polymerization reaction:
(A) about 40.0% to about 80.0% by total weight of the reactants of a monomer mixture comprising:
   (1) about 20.0% to about 35.0% by total weight of the monomer mixture of a member selected from the group consisting of acrylic acid, methacrylic acid, fumaric acid, maleic anhydride, itaconic acid, and combinations thereof,
   (2) about 65.0% to about 80.0% by total weight of the monomer mixture of a member selected from the group consisting of non-carboxylic acid-containing vinylic monomers and combinations thereof,
   (3) a catalytic amount of polymerization initiator, and
   (4) about 0.5% to about 2.0% by total weight of the monomer mixture of chain transfer agent; and
(B) about 20.0% to about 60.0% by total weight of the reactants of a carboxylic acid mixture comprising:
   (1) about 50.0% to about 100.0% by total weight of the carboxylic acid mixture of a member selected from the group consisting of saturated fatty acids, hydrogenated dimer acids, hydrogenated rosins, and combinations thereof,
   (2) up to about 50.0% by total weight of the carboxylic acid mixture of a member selected from the group consisting of rosins, unsaturated fatty acids, and combinations thereof, and
   (3) up to about 0.1% by total weight of the carboxylic acid mixture of bleaching agent;
at a temperature in the range of about 145°C to about 200°C to produce a rosin-fatty acid vinylic polymer composition having a weight average molecular weight in the range of about 4,000 to about 20,000 and an acid number in the range of about 160 to about 260.

The carboxylic acid components in the carboxylic acid mixture function as solvents in the polymerization reaction of the acrylic monomers. Additionally, while a portion of the carboxylic acids remain unreacted, some of the carboxylic acids may become graft polymerized onto the acrylic. The resulting rosin-fatty acid vinylic polymer compositions have a weight average molecular weight in the range of about 4,000 to about 20,000; with the preferred molecular weights being in the range of about 5,000 to about 11,000.

Rosin-fatty acid vinylic polymer compositions produced via the present method have an acid number in the range of about 160 to about 260. It is preferred that the rosin-fatty acid vinylic polymer compositions have an acid number in the range of about 180 to about 250.

The free-radical addition polymerization reaction used to produce the rosin-fatty acid vinylic polymer composition is a melt polymerization reaction in which no water is employed. Reaction temperatures suitable for use in the present method are within the range of about 135°C to about 220°C; with the preferred temperatures being in the range of about 145°C to about 200°C.

From about 15.0% to about 45.0% (preferably from about 20.0% to about 35.0%) by total weight of the monomer mixture employed in the free-radical addition polymerization reaction is a member selected from the group consisting of acrylic acid, methacrylic acid, fumaric acid, maleic anhydride, itaconic acid, and combinations thereof.

From about 55.0% to about 85.0% (preferably from about 65.0% to about 80.0%) by total weight of the monomer mixture is non-carboxylic acid-containing vinylic monomers. Preferred non-carboxylic acid-containing vinylic monomers include, but are not limited to the following: styrene, substituted styrenes, acrylic esters, methacrylic esters, acrylamides, methacrylamides, acrylonitrile, methacrylonitrile, vinyl esters, vinyl chloride, vinylidene chloride, vinylpyridines, N-vinylamides, vinyl ethers, and combinations thereof.

Preferred substituted styrenes suitable for use in the present invention include, but are not limited to, the following: α-methylstyrene, m-methylstyrene, p-methylstyrene, p-tert-butylstyrene, chlorostyrenes, 3-chloromethylstyrene, 4-chloromethylstyrene, and combinations thereof.

Preferred acrylic esters suitable for use in the present invention include, but are not limited to, the following: methyl acrylate, ethyl acrylate, butyl acrylate, isobutyl acrylate, cyclohexyl acrylate, 2-ethylhexyl acrylate, isodecyl acrylate, lauryl acrylate, stearyl acrylate, isobornyl acrylate, benzyl acrylate, hydroxyethyl acrylate, hydroxypropyl acrylate, hydroxybutyl acrylate, methoxyethyl acrylate, ethoxyethyl acrylate, phenoxyethyl acrylate, tetrahydrofurfuryl acrylate, glycidyl acrylate, dimethylaminoethyl acrylate, diethylaminoethyl acrylate, and combinations thereof.

Preferred methacrylic esters suitable for use in the present invention include, but are not limited to, the following: methyl methacrylate, ethyl methacrylate, butyl methacrylate, isobutyl methacrylate, cyclohexyl methacrylate, 2-ethylhexyl methacrylate, isodecyl methacrylate, lauryl methacrylate, stearyl methacrylate, isobornyl methacrylate, benzyl methacrylate, hydroxyethyl methacrylate, hydroxypropyl methacrylate, methoxyethyl methacrylate, ethoxyethyl methacrylate, phenoxyethyl methacrylate, tetrahydrofurfuryl methacrylate, glycidyl methacrylate, dimethylaminoethyl methacrylate, diethylaminoethyl methacrylate, tert-butylaminoethyl methacrylate, acetoxyethyl methacrylate, and combinations thereof.

Preferred acrylamides suitable for use in the present invention include, but are not limited to, the following: acrylamide, N-methylolacrylamide, N-butoxyethylacrylamide, N,N-dimethylacrylamide, N-isopropylacrylamide, N-tert-butylacrylamide, N-tert-octylacrylamide, diacetone acrylamide, and combinations thereof.

Preferred methacrylamides suitable for use in the present invention include, but are not limited to, the following: methacrylamide, N-methylolacrylamide, N,N-dimethylacrylamide, and combinations thereof.

Preferred vinyl esters suitable for use in the present invention include, but are not limited to, the following: vinyl acetate, vinyl propionate, vinyl 2-ethylhexanoate, vinyl neodecanoate, vinyl stearate, and combinations thereof.

Preferred N-vinylamides suitable for use in the present invention include, but are not limited to, the following: N-vinylpyrrolidione, N-vinylcaprolactam, N-vinylformamide,

N-vinylacetamide, and combinations thereof.

Preferred vinyl ethers suitable for use in the present invention include, but are not limited to, the following: methyl vinyl ether, ethyl vinyl ether, butyl vinyl ether, decyl vinyl ether, hydroxybutyl vinyl ether, and combinations thereof.

A catalytic amount of polymerization initiator is used in the free radical polymerization reaction. The amount of initiator employed commonly comprises from about 0.5% to about 5.0% (preferably from about 0.2% to about 2.0%) by total weight of the monomer mixture. Traditional free radical polymerization initiators (such as thermal initiators, redox initiators, and the like) are suitable for use in the polymerization reaction. The type of initiator suitable for use in the present invention is known in the art to depend upon the desired temperature for the reaction. Examples of suitable thermal initiators include, but are not limited to, the following: hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, isopropyl peroxycarbonate, 2,2'-azobis[2-methyl-N-(2-hydroxyethyl)propionamide], 2,2'-azobis(N-butyl-2-methylpropionamide), 2,2'-azobis(N-cyclohexyl-2-methylpropionamide), and combinations thereof. Examples of suitable redox initiators include, but are not limited to, the following: cumene hydroperoxide-sodium metabisulfite, cumene hydroperoxide-iron (II) sulfate, and combinations thereof.

Where desired, a chain transfer agent may be employed in the present method. Chain transfer agents which are suitable for use in the above reaction include, but are not limited to, the following: dodecyl mercaptan, mercaptoacetic acid, mercaptopropionic acid, mercaptosuccinic acid, octyl mercaptan, 2-mercaptoethanol, and combinations thereof. Where employed, it is preferred to use an amount of chain transfer agent in the range of from about 0.5% to about 2.0% by total weight of the monomer mixture of chain transfer agent.

From about 30.0% to about 100.0% (preferably from about 50.0% to about 100.0%) by total weight of the carboxylic acid mixture is a member selected from the group consisting of saturated fatty acids, hydrogenated dimer acids, hydrogenated rosins, and combinations thereof. Any saturated fatty acid containing from about 8 to about 24 carbon atoms may be employed in the present invention. Suitable saturated fatty acids include, but are not limited to, the following: lauric acid, palmitic acid, stearic acid, behenic acid, 12-hydroxystearic acid, isostearic acid, and combinations thereof. Branched-chain acids, such as isostearic acid, are particularly preferred as the resulting polymer is more readily soluble in aqueous base.

Hydrogenated dimer acids suitable for use in the present invention may be made by hydrogenating dimer acid, which in turn is made by dimerizing unsaturated fatty acids to produce a mixture of dicarboxylic acids containing approximately 36 carbon atoms. Typical suitable hydrogenated dimer acids are supplied commercially by Cognis Corporation under the trade name EMPOL and by Uniqema Corporation under the trade name PRIPOL.

A detailed discussion of the manufacture and properties of dimer acids can be found in the Kirk-Othmer Encyclopedia of Chemical Technology, 4^{th} Edition, volume 8, pp. 223-237.

Hydrogenated rosins suitable for use in the present invention are rosins that have been partially or fully hydrogenated. Typical suitable hydrogenated rosins are supplied commercially by Arikawa Chemical Company under the tradenames HYPALE and PINECRYSTAL, and by Resinas Sintϑticas under the tradenames RESIN SH and RESIN HH.

Where desired, up to about 70.0% (preferably up to about 50.0%) by total weight of the carboxylic acid mixture can be a member selected from the group consisting of rosins, unsaturated fatty acids, and combinations thereof. Rosins suitable for optional use in the present invention include gum rosin, tall oil rosin, wood rosin, and combinations thereof.

Unsaturated fatty acids suitable for optional use in the present invention are fatty acids containing about 12 to about 24 carbon atoms and at least one carbon-carbon double bond. Preferred fatty acids include, but are not limited to, the following: oleic acid, linoleic acid, linolenic acid, eleostearic acid, tall oil fatty acids, linseed oil fatty acids, tung oil fatty acids, safflower oil fatty acids, soybean oil fatty acids, and combinations thereof.

A small amount of a bleaching agent can be added to prevent the formation of color bodies during the polymerization reaction, but it is not essential to the practice of the invention, particularly in cases where all of the rosin or fatty acid is of a saturated or hydrogenated nature. Any compatible bleaching agent (such as hypophosphorous acid and the like) or combination of bleaching agents can be utilized.

The preferred method of carrying out the free-radical addition polymerization reaction of the current invention is to charge a reaction vessel with the saturated fatty acid, hydrogenated dimer acid, hydrogenated rosin, or combinations thereof together with the optional rosin and/or unsaturated fatty acid and then heat the contents of the reaction vessel with stirring to a temperature in the range of about 135°C to about 220°C (preferably about 145°C to about 200°C). The vinylic monomers, initiator, and optional chain transfer agent are then added to the reaction vessel continuously over a period of about one to about five hours (preferably about two to about four hours). After the monomer addition is complete, the reaction is continued at the specified temperature for up to an additional five hours (preferably an additional one to three hours) to complete the addition polymerization reaction.

The resulting polymer compositions can be used as support resins for the free-radical emulsion polymerization of vinylic monomers by methods that are well known in the art to produce latices that are useful as binders for inks (particularly flexographic inks) and other coatings. The latices thus produced show lower residual monomer levels when compared with comparable latices made with support resins which contain significant amounts of unsaturated fatty acids.

Water-based inks and other coatings can be formulated by employing a latex comprising as a support resin an aqueous solution of the instant rosin-fatty acid vinylic polymer compositions with desired pigment. As used herein the term "pigment" refers to a water-insoluble colorant. Any pigment that is compatible with water-based inks may be employed in the practice of the invention. It is well within the ability of one skilled in the art to employ the rosin-fatty acid vinylic polymer compositions taught herein to produce such latexes, inks, and coatings.

The rosin-fatty acid vinylic polymer compositions may also be employed to formulate aqueous varnishes for use on substrates such as wood, concrete, brick, masonary, and the like. Where desired, pigment can be added to the varnish in order to formulate aqueous paints for use on these substrates. Any pigment that is compatible with aqueous paints may be employed in the practice of the invention. It is well within the ability of one skilled in the art to employ the rosin-fatty acid vinylic polymer compositions taught herein to produce such varnishes and paints.

The following examples are provided to further illustrate the present invention and are not to be construed as limiting the invention in any manner.

### EXAMPLE 1

A rosin-fatty acid vinylic polymer composition was prepared as follows. To a 500-ml round bottom flask equipped with a stirrer, heating mantle, reflux condenser, and addition funnel was charged 71.6 g of PRIPOL 1009 (a hydrogenated dimer acid available from Uniqema Corp.), 37.5 g of SS rosin (a tall oil rosin available from MeadWestvaco Corp.), and 0.07 g of hypophosphorous acid. The charge was heated with stirring to 175°C, and the addition of a monomer mixture consisting of 74.9 g of styrene, 74.9 g of ∀-methylstyrene, 92.4 g of acrylic acid, and 3.76 g of di-tert-butyl peroxide was started. The monomer mixture was added over two hours at 173°C. After the monomer addition was complete, stirring was continued for an additional hour, during which time the temperature was gradually increased to 180°C. Then an additional 0.39 g of di-tert-butyl peroxide was charged, and stirring was continued for an additional two hours, during which time the temperature was gradually increased to 180°C, to complete the polymerization reaction. The rosin-fatty acid vinylic polymer composition obtained upon cooling of the reaction mass (hereinafter referred to as "Polymer No. 1") was a solid polymer having a ring-and-ball softening point of 140°C, an acid number of 236, and a weight average molecular weight of 5720. A 30% solution of this polymer in aqueous ammonia had a Gardener color of 4. The Gardener scale, which is widely employed in the art for determining the color of varnishes and resin solutions, defines color by the chromaticities of glass standards numbered from 1 for the lightest to 18 for the darkest.

### EXAMPLE 2

A rosin-fatty acid vinylic polymer composition was prepared as follows. To a 500-ml round bottom flask equipped with a stirrer, heating mantle, reflux condenser, and addition funnel was charged 71.6 g of isostearic acid, 37.5 g of PINECRYSTAL KR-610 (a hydrogenated rosin available from Arakawa Chemical), and 0.07 g of hypophosphorous acid. The charge was heated with stirring to 175°C, and the addition of a monomer mixture consisting of 74.9 g of styrene, 74.9 g of α-methylstyrene, 92.4 g of acrylic acid, and 3.76 g of di-tert-butyl peroxide was started. The monomer mixture was added over two hours at 173°C. After the monomer addition was complete, stirring was continued for an additional hour, during which time the temperature was gradually increased to 180°C. Then an additional 0.39 g of di-tert-butyl peroxide was charged and stirring was continued for an additional two hours at 180°C to complete the polymerization reaction. The rosin-fatty acid vinylic polymer composition obtained upon cooling of the reaction mass (hereinafter referred to as "Polymer No. 2") was a solid polymer having a ring-and-ball softening point of 122°C, an acid number of 230, and a weight average molecular weight of 4700. A 30% solution of this polymer in aqueous ammonia had a Gardener color of 2.

### EXAMPLE 3

A rosin-fatty acid vinylic polymer composition was prepared as follows. To a 500-ml round bottom flask equipped with a stirrer, heating mantle, reflux condenser, and addition funnel was charged 71.6 g of L-5 fatty acid (a tall oil fatty acid available from MeadWestvaco Corp.), 37.5 g of HYPALE CH (a hydrogenated rosin available from Arikawa Chemical), and 0.07 g of hypophosphorous acid. The charge was heated with stirring to 175°C, and the addition of a monomer mixture consisting of 74.9 g of styrene, 74.9 g of ∀-methylstyrene, 92.4 g of acrylic acid, and 3.76 g of di-tert-butyl peroxide was started. The monomer mixture was added over two hours at 173°C. After the monomer addition was complete, stirring was continued for an additional hour at 175°C. Then an additional 0.39 g of di-tert-butyl peroxide was charged, and stirring was continued for an additional two hours at 175°C to complete the polymerization reaction. The rosin-fatty acid vinylic polymer composition obtained upon cooling of the reaction mass (hereinafter referred to as "Polymer No. 3") was a solid polymer having a ring-and-ball softening point of 122°C, an acid number of 233, and a weight average molecular weight of 5160. A 30% solution of this polymer in aqueous ammonia had a Gardener color of 4.

### EXAMPLE 4

For comparison purposes, a rosin-fatty acid vinylic polymer was prepared as following the method taught in U.S. Patent No. 6,437,033 B 1. To a 500-ml round bottom flask equipped with a stirrer, heating mantle, reflux condenser, and addition funnel was charged 71.6 g of L-5 fatty acid (a tall oil fatty acid available from MeadWestvaco Corp.), 37.5 g of SS rosin (a tall oil rosin available from MeadWestvaco Corp.), and 0.07 g of hypophosphorous acid. The charge was heated with stirring to 175°C, and the addition of a monomer mixture consisting of 74.9 g of styrene, 74.9 g of ∀-methylstyrene, 92.4 g of acrylic acid, and 3.76 g of di-tert-butyl peroxide was started. The monomer mixture was added over two hours at 173°C. After the monomer addition was complete, stirring was continued for an additional hour at 175°C. Then an additional 0.39 g of di-tert-butyl peroxide was charged, and stirring was continued for an additional two hours at 175°C to complete the polymerization reaction. The rosin-fatty acid vinylic polymer obtained upon cooling of the reaction mass (hereinafter referred to as the "Comparison Polymer") was a solid polymer having a ring-and-ball softening point of 125°C, an acid number of 235, and a weight average molecular weight of 4780. A 30% solution of this polymer in aqueous ammonia had a Gardener color of 7.

A latex was produced as follows using the Comparison Polymer as a support resin. To a 200 ml round-bottomed flask fitted with a stirrer, heating mantle, thermometer, and monomer addition pump was charged 409.1 g of deionized water, 104.8 g of the Comparison Polymer, and 20.0 g of 28% aqueous ammonia. The batch was heated with stirring to 70°C to dissolve the resin. The batch was then heated to 82°C, and a solution of 1.16 g of ammonium persulfate and 0.18 g of 28% aqueous ammonia in 13.6 g of deionized water was charged. Stirring was continued at 82°C while a monomer feed comprising 99.3 g of styrene, 167.1 g of methyl methacrylate, and 108.3 g of 2-ethylhexyl acrylate and an initiator feed comprising 1.16 g of ammonium persulfate, 0.26 g of 28% aqueous ammonia, and 65.9 g of deionized water were added concurrently over two hours. The batch was then held for thirty minutes at 82°C, a solution of 1.16 g of ammonium persulfate and 0.18 g of 28% aqueous ammonia in 13.6 g of deionized water was charged, and the batch was held at 82°C for an additional hour to complete the reaction. The resulting latex had a distinctly tan color and a level of residual 2-ethylhexyl acrylate of 2795 ppm.

### EXAMPLE 5

A latex was produced following the procedure of Example 4, wherein the Comparison Polymer was replaced with Polymer No. 1. The resultant latex was white in appearance and had a level of residual 2-ethylhexyl acrylate of 409 ppm, which is substantially below the residual level contained in the Comparison Polymer's latex.

### EXAMPLE 6

A latex was produced following the procedure of Example 4, wherein the Comparison Polymer was replaced with Polymer No. 2. The resultant latex had a level of residual 2-ethylhexyl acrylate of 419 ppm and was white in appearance.

### EXAMPLE 7

A water-based flexographic ink can be made from the latex of Example 5 by stirring together 34 parts by weight of FLEXIVERSE BFD1121 (a phthalocyanine blue pigment dispersion available from Sun Chemical Corp.), 60 parts of the latex of Example 9, 5 parts of PE-392N3 5 (a polyethylene wax dispersion available from Chemcor Chemical Corp.), and 1 part of DOW 51 (a defoamer available from Dow Chemical Co.).

### EXAMPLE 8

A water-based, high-gloss overprint varnish can be made from the latex of Example 6 by stirring together 89 parts by weight of the latex of Example 2,5 parts of water, 0.1 part of FOAMBLAST 340 (a defoamer available from ROSS Chern Inc.), 3.5 parts of PEW-392N35 (a polyethylene wax dispersion available from Chemcor Chemical Corp.), and 2.4 parts of SURFYNOL 420 (a surfactant available from Air Products and Chemicals Inc.).

### EXAMPLE 9

A white architectural paint can be made from the latex of Example 5 as follows. A pigment concentrate is made by grinding 200 parts by weight of titanium dioxide pigment in a mixture of 100 parts of water, 2 parts of NATROSOL Plus 330 (a rheology modifier available from Hercules, Inc.), 11.1 parts of TAMOL 165A (a dispersant available from Rohm & Haas Co.), 2.2. parts of IGEPAL CTA 639W (a dispersant available from Rhodia), 1.9 parts of 28% aqueous ammonia, and 1 part of BYK 022 (a defoamer available from ByK-Chemie USA). This pigment concentrate is then let down with 29.7 parts of water, 1.9 parts of RHODOLINE 645 (a defoamer available from Rhodia), 587.2 parts of the latex of Example 6, 5.8 parts of SURFYNOL 104DPM (a surfactant available from Air Products and Chemicals Inc.), 9.3 parts of SANTICIZER 160 (a plasticizer available from Solutia Inc.), 23.6 parts of VELATE 368 (a plasticizer available from Velsicol Chemical Corp.), 8.1 parts of NUOCURE CK-10 (a drier available from CONDEA Servo LLC), 1.9 parts of 28% aqueous ammonia, and a solution of 6 parts of POLYPHOBE 115 (a rheology modifier available from Union Carbide Corp.) in 16.7 parts of water.

It is understood that the scope of the invention is not to be limited by the foregoing description, but rather is to be defined by the claims appended hereto.

## Claims

1. A method for producing rosin-fatty acid vinylic polymer compositions which comprises reacting in a free-radical addition polymerization reaction:
(A) About 40% to about 80% by total weight of the reactants of a monomer mixture comprising:
(1) about 15.0% to about 45.0% by total weight of the monomer mixture of a member selected from the group consisting of acrylic acid, methacrylic acid, fumaric acid, maleic anhydride, itaconic acid, and combinations thereof,
(2) about 55.0% to about 85.0% by total weight of the monomer mixture of a member selected from the group consisting of non-carboxylic acid-containing vinylic monomers and combinations thereof,
(3) a catalytic amount of polymerization initiator, and
(4) up to about 4.0% by total weight of the monomer mixture of chain transfer agent, and
(B) about 20% to about 60% by total weight of the reactants of a carboxylic acid mixture comprising:
(1) about 30.0% to about 100.0% by total weight of the carboxylic acid mixture of a member selected from the group consisting of saturated fatty acids, hydrogenated dimer acids, hydrogenated rosins, and combinations thereof;
(2) up to about 70.0% by total weight of the carboxylic acid mixture of a member selected from the group consisting of rosins, unsaturated fatty acids, and combinations thereof; and
(3) up to about 0.1 % by total weight of the carboxylic acid mixture of bleaching agent,
at a temperature in the range of about 135°C to about 220°C to produce a rosin-fatty acid vinylic polymer composition having a weight average molecular weight in the range of about 4,000 to about 20,000 and an acid number in the range of about 160 to about 260.

2. The method of claim 1 which comprises reacting in a free-radical addition polymerization reaction:
(A) About 40% to about 80% by total weight of the reactants of a monomer mixture comprising:
(1) about 20.0% to about 35.0% by total weight of the mixture of a member selected from the group consisting of acrylic acid, methacrylic acid, fumaric acid, maleic anhydride, itaconic acid, and combinations thereof,
(2) about 65.0% to about 80.0% by total weight of the mixture of a member selected from the group consisting of non-carboxylic acid-containing vinylic monomers and combinations thereof,
(3) a catalytic amount of polymerization initiator, and
(4) about 0.5% to about 2.0% by total weight of the mixture of chain transfer agent, and
(B) about 20% to about 60% by total weight of the reactants of a carboxylic acid mixture comprising:
(1) about 50.0% to about 100.0% by total weight of the carboxylic acid mixture of a member selected from the group consisting of saturated fatty acids, hydrogenated dimer acids, hydrogenated rosins, and combinations thereof;
(2) up to about 50.0% by total weight of the carboxylic acid mixture of a member selected from the group consisting of rosins, unsaturated fatty acids, and combinations thereof; and
(3) up to about 0.1% by total weight of the carboxylic acid mixture of bleaching agent,
at a temperature in the range of about 145°C to about 200°C to produce a rosin-fatty acid vinylic polymer composition having a weight average molecular weight in the range of about 4,000 to about 20,000 and an acid number in the range of about 160 to about 260.

3. The method of claim 1 wherein the rosin-fatty acid vinylic polymer composition has a weight average molecular weight in the range of about 5,000 to about 11,000.

4. The method of claim 1 wherein the rosin-fatty acid vinylic polymer composition has an acid number in the range of about 180 to about 250.

5. The method of claim 1 wherein the non-carboxylic acid-containing vinylic monomer is a member selected from the group consisting of styrene, substituted styrenes, acrylic esters, methacrylic esters, acrylamides, methacrylamides, acrylonitrile, methacrylonitrile, vinyl esters, vinyl chloride, vinylidene chloride, vinylpyridines, N-vinylamides, vinyl ethers, and combinations thereof.

6. The method of claim 5 wherein the non-carboxylic acid-containing vinylic monomer is a member selected from the group consisting of α-methylstyrene, m-methylstyrene,
p-methylstyrene, p-tert-butylstyrene, chlorostyrenes, 3-chloromethylstyrene, 4-chloromethylstyrene, methyl acrylate, ethyl acrylate, butyl acrylate, isobutyl acrylate, cyclohexyl acrylate, 2-ethylhexyl acrylate, isodecyl acrylate, lauryl acrylate, stearyl acrylate, isobornyl acrylate, benzyl acrylate, hydroxyethyl acrylate, hydroxypropyl acrylate, hydroxybutyl acrylate, methoxyethyl acrylate, ethoxyethyl acrylate, phenoxyethyl acrylate, tetrahydrofurfuryl acrylate, glycidyl acrylate, dimethylaminoethyl acrylate, diethylaminoethyl acrylate, methyl methacrylate, ethyl methacrylate, butyl methacrylate, isobutyl methacrylate, cyclohexyl methacrylate, 2-ethylhexyl methacrylate, isodecyl methacrylate, lauryl methacrylate, stearyl methacrylate, isobornyl methacrylate, benzyl methacrylate, hydroxyethyl methacrylate, hydroxypropyl methacrylate, methoxyethyl methacrylate, ethoxyethyl methacrylate, phenoxyethyl methacrylate, tetrahydrofurfuryl methacrylate, glycidyl methacrylate, dimethylaminoethyl methacrylate, diethylaminoethyl methacrylate, tert-butylaminoethyl methacrylate, acetoxyethyl methacrylate, acrylamide, N-methylolacrylamide, N-butoxyethylacrylamide, N,N-dimethylacrylamide, N-isopropylacrylamide, N-tert-butylacrylamide, N-tert-octylacrylamide, diacetone acrylamide, methacrylamide, N-methylolacrylamide, N,N-dimethylacrylamide, vinyl acetate, vinyl propionate, vinyl 2-ethylhexanoate, vinyl neodecanoate, vinyl stearate, N-vinylpyrrolidione, N-vinylcaprolactam, N-vinylformamide, N-vinylacetamide, methyl vinyl ether, ethyl vinyl ether, butyl vinyl ether, decyl vinyl ether, hydroxybutyl vinyl ether, and combinations thereof.

7. The method of claim 1 wherein the polymerization initiator comprises from about 0.5% to about 5.0% by total weight of the monomer mixture and is a member selected from the group consisting of thermal initiators, redox initiators, and combinations thereof.

8. The method of claim 1 wherein the chain transfer agent is a member selected from the group consisting of dodecyl mercaptan, mercaptoacetic acid, mercaptopropionic acid, mercaptosuccinic acid, octyl mercaptan, 2-mercaptoethanol, and combinations thereof.

9. The method of claim 1 wherein the saturated fatty acid contains from 8 to 24 carbon atoms.

10. The method of claim 9 wherein the saturated fatty acid is a member selected from the group consisting of lauric acid, palmitic acid, stearic acid, behenic acid, 12-hydroxystearic acid, isostearic acid, and combinations thereof.

11. The method of claim 1 wherein the hydrogenated rosin is partially hydrogenated.

12. The method of claim 1 wherein the unsaturated fatty acid is a member selected from the group consisting of fatty acids containing from 12 to 24 carbon atoms and at least one carbon-carbon double bond, and combinations thereof.

13. The method of claim 12 wherein the unsaturated fatty acid is a member selected from the group consisting of oleic acid, linoleic acid, linolenic acid, eleostearic acid, tall oil fatty acids, linseed oil fatty acids, tung oil fatty acids, safflower oil fatty acids, soybean oil fatty acids, and combinations thereof.

14. The method of claim 1 wherein the rosin is a member selected from the group consisting of tall oil rosin, wood rosin, gum rosin, and combinations thereof

15. The rosin-fatty acid vinylic polymer composition of claim 1.

16. A latex comprising as a support resin an aqueous solution of the rosin-fatty acid vinylic polymer composition of claim 15.

17. An ink comprising the latex of claim 16.

18. The ink of claim 17 wherein the ink further comprises a pigment.

19. A varnish comprising the rosin-fatty acid vinylic polymer composition of claim 15.

20. A paint comprising the latex of claim 16.

21. The paint of claim 20 wherein the paint further comprises a pigment.

## Patentansprüche

1. Verfahren zur Herstellung von Harz-Fettsäurevinylpolymerzusammensetzungen, umfassend eine Umsetzung in einer Radikaladditionspolymerisationsreaktion von:
(A) etwa 40% bis etwa 80% des Gesamtgewichts der Reaktanten eines Monomergemisches, umfassend:
(1) etwa 15,0% bis etwa 45,0% des Gesamtgewichts des Monomergemisches eines Mitglieds ausgewählt aus der Gruppe bestehend aus Acrylsäure, Methacrylsäure, Fumarsäure, Maleinsäureanhydrid, Itaconsäure, und Kombinationen davon,
(2) etwa 55,0% bis etwa 85,0% des Gesamtgewichts des Monomergemisches eines Mitglieds ausgewählt aus der Gruppe bestehend aus Carbonsäure-freien vinylischen Monomeren und Kombinationen davon,
(3) eine katalytische Menge eines Polymerisationsstarters, und
(4) bis zu etwa 4,0% des Gesamtgewichts des Monomergemisches eines Kettenübertragungsmittels, und
(B) etwa 20% bis etwa 60% des Gesamtgewichts der Reaktanten eines Carbonsäuregemisches, umfassend:
(1) etwa 30,0% bis etwa 100,0% des Gesamtgewichts des Carbonsäuregemisches eines Mitglieds ausgewählt aus der Gruppe bestehend aus gesättigten Fettsäuren, hydrierten Dimersäuren, hydrierten Harzen, und Kombinationen davon,
(2) bis zu etwa 70,0% des Gesamtgewichts des Carbonsäuregemisches eines Mitglieds ausgewählt aus der Gruppe bestehend aus Harzen, ungesättigten Fettsäuren, und Kombinationen davon, und
(3) bis zu etwa 0,1% des Gesamtgewichts des Carbonsäuregemisches eines Bleichmittels,
bei einer Temperatur im Bereich von etwa 135°C bis etwa 220°C, um eine Harz-Fettsäurevinylpolymerzusammensetzung mit einer massegemittelten Molekülmasse im Bereich von etwa 4 000 bis etwa 20 000 und einer Säurezahl im Bereich von etwa 160 bis etwa 260 herzustellen.

2. Verfahren nach Anspruch 1, umfassend eine Umsetzung in einer Radikaladditionspolymerisationsreaktion von:
(A) etwa 40% bis etwa 80% des Gesamtgewichts der Reaktanten eines Monomergemisches, umfassend:
(1) etwa 20,0% bis etwa 35,0% des Gesamtgewichts des Gemisches eines Mitglieds ausgewählt aus der Gruppe bestehend aus Acrylsäure, Methacrylsäure, Fumarsäure, Maleinsäureanhydrid, Itaconsäure, und Kombinationen davon,
(2) etwa 65,0% bis etwa 80,0% des Gesamtgewichts des Gemisches eines Mitglieds ausgewählt aus der Gruppe bestehend aus Carbonsäure-freien vinylischen Monomeren und Kombinationen davon,
(3) eine katalytische Menge eines Polymerisationsstarters, und
(4) etwa 0,5% bis etwa 2,0% des Gesamtgewichts des Gemisches eines Kettenübertragungsmittels, und
(B) etwa 20% bis etwa 60% des Gesamtgewichts der Reaktanten eines Carbonsäuregemisches, umfassend:
(1) etwa 50,0% bis etwa 100,0% des Gesamtgewichts des Carbonsäuregemisches eines Mitglieds ausgewählt aus der Gruppe bestehend aus gesättigten Fettsäuren, hydrierten Dimersäuren, hydrierten Harzen, und Kombinationen davon,
(2) bis zu etwa 50,0% des Gesamtgewichts des Carbonsäuregemisches eines Mitglieds ausgewählt aus der Gruppe bestehend aus Harzen, ungesättigten Fettsäuren, und Kombinationen davon, und
(3) bis zu etwa 0,1% des Gesamtgewichts des Carbonsäuregemisches eines Bleichmittels,
bei einer Temperatur im Bereich von etwa 145°C bis etwa 200°C, um eine Harz-Fettsäurevinylpolymerzusammensetzung mit einer massegemittelten Molekülmasse im Bereich von etwa 4 000 bis etwa 20 000 und einer Säurezahl im Bereich von etwa 160 bis etwa 260 herzustellen.

3. Verfahren nach Anspruch 1, wobei die Harz-Fettsäurevinylpolymerzusammensetzung eine massegemittelte Molekülmasse im Bereich von etwa 5 000 bis etwa 11 000 aufweist.

4. Verfahren nach Anspruch 1, wobei die Harz-Fettsäurevinylpolymerzusammensetzung eine Säurezahl im Bereich von etwa 180 bis etwa 250 aufweist.

5. Verfahren nach Anspruch 1, wobei das Carbonsäure-freie vinylische Monomer ein Mitglied ist ausgewählt aus der Gruppe bestehend aus Styrol, substituierten Styrolen, Acrylsäureestern, Methacrylsäureestern, Acrylamiden, Methacrylamiden, Acrylnitril, Methacrylnitril, Vinylestern, Vinylchlorid, Vinylidenchlorid, Vinylpyridinen, N-Vinylamiden, Vinylethem, und Kombinationen davon.

6. Verfahren nach Anspruch 5, wobei das Carbonsäure-freie vinylische Monomer ein Mitglied ist ausgewählt aus der Gruppe bestehend aus α-Methylstyrol, m-Methylstyrol, p-Methylstyrol, p-tert-Butylstyrol, Chlorstyrolen, 3-Chlormethylstyrol, 4-Chlormethylstyrol, Methylacrylat, Ethylacrylat, Butylacrylat, Isobutylacrylat, Cyclohexylacrylat, 2-Ethylhexylacrylat, Isodecylacrylat, Laurylacrylat, Stearylacrylat, Isobornylacrylat, Benzylacrylat, Hydroxyethylacrylat, Hydroxypropylacrylat, Hydroxybutylacrylat, Methoxyethylacrylat, Ethoxyethylacrylat, Phenoxyethylacrylat, Tetrahydrofurfurylacrylat, Glycidylacrylat, Dimethylaminoethylacrylat, Diethylaminoethylacrylat, Methylmethacrylat, Ethylmethacrylat, Butylmethacrylat, Isobutylmethacrylat, Cyclohexylmethacrylat, 2-Ethylhexylmethacrylat, Isodecylmethacrylat, Laurylmethacrylat, Stearylmethacrylat, Isobornylmethacrylat, Benzylmethacrylat, Hydroxyethylmethacrylat, Hydroxypropylmethacrylat, Methoxyethylmethacrylat, Ethoxyethylmethacrylat, Phenoxyethylmethacrylat, Tetrahydrofurfurylmethacrylat, Glycidylmethacrylat, Dimethylaminoethylmethacrylat, Diethylaminoethylmethacrylat, tert-Butylaminoethylmethacrylat, Acetoxyethylmethacrylat, Acrylamid, N-Methylolacrylamid, N-Butoxyethylacrylamid, N,N-Dimethylacrylamid, N-Isopropylacrylamid, N-tert-Butylacrylamid, N-tert-Octylacrylamid, Diacetonacrylamid, Methacrylamid, N-Methylolacrylamid, N,N-Dimethylacrylamid, Vinylacetat, Vinylpropionat, Vinyl-2-ethylhexanoat, Vinylneodecanoat, Vinylstearat, N-Vinylpyrrolidion, N-Vinylcaprolactam, N-Vinylformamid, N-Vinylacetamid, Methylvinylether, Ethylvinylether, Butylvinylether, Decylvinylether, Hydroxybutylvinylether, und Kombinationen davon.

7. Verfahren nach Anspruch 1, wobei der Polymerisationsstarter etwa 0,5% bis etwa 5,0% des Gesamtgewichts des Monomergemisches umfasst und ein Mitglied ist ausgewählt aus der Gruppe bestehend aus thermischen Startern, Redoxstartern, und Kombinationen davon.

8. Verfahren nach Anspruch 1, wobei das Kettenübertragungsmittel ein Mitglied ist ausgewählt aus der Gruppe bestehend aus Dodecylmercaptan, Mercaptoessigsäure, Mercaptopropionsäure, Mercaptobernsteinsäure, Octylmercaptan, 2-Mercaptoethanol, und Kombinationen davon.

9. Verfahren nach Anspruch 1, wobei die gesättigte Fettsäure 8 bis 24 Kohlenstoffatome enthält.

10. Verfahren nach Anspruch 9, wobei die gesättigte Fettsäure ein Mitglied ist ausgewählt aus der Gruppe bestehend aus Laurinsäure, Palmitinsäure, Stearinsäure, Behensäure, 12-Hydroxystearinsäure, Isostearinsäure, und Kombinationen davon.

11. Verfahren nach Anspruch 1, wobei das hydrierte Harz teilweise hydriert ist.

12. Verfahren nach Anspruch 1, wobei die ungesättigte Fettsäure ein Mitglied ist ausgewählt aus der Gruppe bestehend aus Fettsäuren mit 12 bis 24 Kohlenstoffatomen und mindestens einer Kohlenstoff-Kohlenstoff-Doppelbindung und Kombinationen davon.

13. Verfahren nach Anspruch 12, wobei die ungesättigte Fettsäure ein Mitglied ist ausgewählt aus der Gruppe bestehend aus Ölsäure, Linolsäure, Linolensäure, Eleostearinsäure, Tallölfettsäuren, Leinsamenölfettsäuren, Tungölfettsäuren, Distelölfettsäuren, Sojabohnenölfettsäuren, und Kombinationen davon.

14. Verfahren nach Anspruch 1, wobei das Harz ein Mitglied ist ausgewählt aus der Gruppe bestehend aus Tallölharz, Holzharz, Gummiharz, und Kombinationen davon.

15. Harz-Fettsäurevinylpolymerzusammensetzung nach Anspruch 1.

16. Latex, der als Trägerharz eine wässrige Lösung der Harz-Fettsäurevinylpolymerzusammensetzung nach Anspruch 15 umfasst.

17. Druckfarbe, die den Latex nach Anspruch 16 umfasst.

18. Druckfarbe nach Anspruch 17, wobei die Druckfarbe ferner ein Pigment umfasst.

19. Lack, der die Harz-Fettsäurevinylpolymerzusammensetzung nach Anspruch 15 umfasst.

20. Anstrichmittel, das den Latex nach Anspruch 16 umfasst.

21. Anstrichmittel nach Anspruch 20, wobei das Anstrichmittel ferner ein Pigment umfasst.

## Revendications

1. Procédé pour la production de compositions polymères vinyliques acide gras-colophane qui comprend les étapes consistant à faire réagir dans une réaction de polymérisation par addition radicalaire :
(A) D'environ 40 % à environ 80 % de la masse totale des réactifs d'un mélange de monomères comprenant :
(1) d'environ 15,0 % à environ 45,0 % de la masse totale du mélange de monomères d'un élément choisi dans le groupe constitué de l'acide acrylique, de l'acide méthacrylique, de l'acide fumarique, de l'anhydride maléique, de l'acide itaconique, et de leurs mélanges,
(2) d'environ 55,0 % à environ 85,0 % de la masse totale du mélange de monomère d'un élément choisi dans le groupe constitué des monomères vinyliques contenant un acide non carboxylique et de leurs mélanges,
(3) une quantité catalytique d'initiateur de polymérisation, et
(4) jusqu'à environ 4,0 % de la masse totale du mélange de monomères d'agent de transfert de chaîne, et
(B) d'environ 20 % à environ 60 % de la masse totale des réactifs d'un mélange d'acide carboxylique comprenant :
(1) d'environ 30,0 % à environ 100,0 % de la masse totale du mélange d'acide carboxylique d'un élément choisi dans le groupe constitué des acides gras saturés, des acides dimérisés hydrogénés, des colophanes hydrogénées, et de leurs mélanges ;
(2) jusqu'à environ 70,0 % de la masse totale du mélange d'acide carboxylique d'un élément choisi dans le groupe constitué des colophanes, des acides gras insaturés, et de leurs mélanges ; et
(3) jusqu'à environ 0,1 % de la masse totale du mélange d'acide carboxylique d'agent de blanchiment, à une température dans l'intervalle d'environ 135 °C à environ 220 °C pour produire une composition polymère vinylique acide gras-colophane ayant une masse moléculaire moyenne en poids dans l'intervalle d'environ 4 000 à environ 20 000 et un nombre d'acide dans l'intervalle d'environ 160 à environ 260.

2. Procédé selon la revendication 1, qui comprend les étapes consistant à faire réagir dans une réaction de polymérisation par addition radicalaire :
(A) D'environ 40 % à environ 80 % de la masse totale des réactifs d'un mélange de monomères comprenant :
(1) d'environ 20,0 % à environ 35,0 % de la masse totale du mélange d'un élément choisi dans le groupe constitué de l'acide acrylique, de l'acide méthacrylique, de l'acide fumarique, de l'anhydride maléique, de l'acide itaconique, et de leurs mélanges,
(2) d'environ 65,0 % à environ 80,0 % de la masse totale du mélange d'un élément choisi dans le groupe constitué des monomères vinyliques contenant de l'acide non carboxylique et de leurs mélanges,
(3) une quantité catalytique d'initiateur de polymérisation, et
(4) d'environ 0,5 % à environ 2,0 % de la masse totale du mélange d'agent de transfert de chaîne, et
(B) d'environ 20% à environ 60 % de la masse totale de réactifs d'un mélange d'acide carboxylique comprenant :
(1) d'environ 50,0 % à environ 100,0 % de la masse totale du mélange d'acide carboxylique d'un élément choisi dans le groupe constitué des acides gras saturés, des acides dimérisés hydrogénés, des colophanes hydrogénées, et de leurs mélanges ;
(2) jusqu'à environ 50,0 % de la masse totale du mélange d'acide carboxylique d'un élément choisi dans le groupe constitué des colophanes, des acides gras insaturés, et de leurs mélanges ; et
(3) jusqu'à environ 0,1 % de la masse totale du mélange d'acide carboxylique d'agent de blanchiment, à une température dans l'intervalle d'environ 145 °C à environ 200°C pour produire une composition polymère vinylique acide gras-colophane ayant une masse moléculaire moyenne en poids dans l'intervalle d'environ 4 000 à environ 20 000 et un nombre d'acide dans l'intervalle d'environ 160 à environ 260.

3. Procédé selon la revendication 1, dans lequel la composition polymère vinylique acide gras-colophane a une masse moléculaire moyenne en poids dans l'intervalle d'environ 5 000 à environ 11 000.

4. Procédé selon la revendication 1, dans lequel la composition polymère vinylique acide gras-colophane a un nombre d'acide dans l'intervalle d'environ 180 à environ 250.

5. Procédé selon la revendication 1, dans lequel le monomère vinylique contenant de l'acide non carboxylique est un élément choisi dans le groupe constitué du styrène, des styrènes substitués, des esters acryliques, des esters méthacryliques, des acrylamides, des méthacrylamides, de l'acrylonitrile, du méthacrylonitrile, des esters vinyliques, du chlorure de vinyle, du chlorure de vinylidène, des vinylpyridines, des N-vinylamides, des éthers vinyliques, et de leurs mélanges.

6. Procédé selon la revendication 5, dans lequel le monomère vinylique contenant de l'acide non carboxylique est un élément choisi dans le groupe constitué de l'_-méthylstyrène, du m-méthylstyrène, du p-méthylstyrène, du p-tert-butylstyrène, des chlorostyrènes, du 3-chlorométhylstyrène, du 4-chlorométhylstyrène, de l'acrylate de méthyle, de l'acrylate d'éthyle, de l'acrylate de butyle, de l'acrylate d'isobùtyle, de l'acrylate de cyclohexyle, de l'acrylate de 2-éthylhexyle, de l'acrylate d'isodécyle, de l'acrylate de lauryle, de l'acrylate de stéaryle, de l'acrylate d'isobornyle, de l'acrylate de benzyle, de l'acrylate d'hydroxyéthyle, de l'acrylate d'hydroxypropyle, de l'acrylate d'hydroxybutyle, de l'acrylate de méthoxyéthyle, de l'acrylate d'éthoxyéthyle, de l'acrylate de phénoxyéthyle, de l'acrylate de tétrahydrofurfuryle, de l'acrylate de glycidyle, de l'acrylate de diméthylaminoéthyle, de l'acrylate de diéthylaminoéthyle, du méthacrylate de méthyle, du méthacrylate d'éthyle, du méthacrylate de butyle, du méthacrylate d'isobutyle, du méthacrylate de cyclohexyle, du méthacrylate de 2-éthylhexyle, du méthacrylate d'isodécyle, du méthacrylate de lauryle, du méthacrylate de stéaryle, du méthacrylate d'isobornyle, du méthacrylate de benzyle, du méthacrylate d'hydroxyéthyle, du méthacrylate d'hydroxypropyle, du méthacrylate de méthoxyéthyle, du méthacrylate d'éthoxyéthyle, du méthacrylate de phénoxyéthyle, du méthacrylate de tétrahydrofurfuryle, du méthacrylate de glycidyle, du méthacrylate de diméthylaminoéthyle, du méthacrylate de diéthylaminoéthyle, du méthacrylate de tert-butylaminoéthyle, du méthacrylate d'acétoxyéthyle, de l'acrylamide, du N-méthylolacrylamide, du N-butoxyéthylacrylamide, du N,N-diméthylacrylamide, du N-isopropylacrylamide, du N-tert-butylacrylamide, du N-tert-octylacrylamide, de la diacétone-acrylamide, du méthacrylamide, du N-méthylolacrylamide, du N,N-diméthylacrylamide, de l'acétate de vinyle, du propionate de vinyle, du 2-éthylhexanoate de vinyle, du néodécanoate de vinyle, du stéarate de vinyle, de la N-vinylpyrrolidione, du N-vinylcaprolactame, du N-vinylformamide, du N-vinylacétamide, de l'éther méthylvinylique, de l'éther éthylvinylique, de l'éther butylvinylique, de l'éther décylvinylique, de l'éther hydroxybutylvinylique, et de leurs mélanges.

7. Procédé selon la revendication 1, dans lequel l'initiateur de polymérisation comprend d'environ 0,5 % à environ 5,0 % de la masse totale du mélange de monomères et est un élément choisi dans le groupe constitué des initiateurs thermiques, des initiateurs redox, et de leurs mélanges.

8. Procédé selon la revendication 1, dans lequel l'agent de transfert de chaîne est un élément choisi dans le groupe constitué du dodécyl-mercaptan, de l'acide mercaptoacétique, de l'acide mercaptopropionique, de l'acide mercaptosuccinique, de l'octyl-mercaptan, du 2-mercaptoéthanol, et de leurs mélanges.

9. Procédé selon la revendication 1, dans lequel l'acide gras saturé contient de 8 à 24 atomes de carbone.

10. Procédé selon la revendication 9, dans lequel l'acide gras saturé est un élément choisi dans le groupe constitué de l'acide laurique, de l'acide palmitique, de l'acide stéarique, de l'acide béhénique, de l'acide 12-hydroxystéarique, de l'acide isostéarique, et de leurs mélanges.

11. Procédé selon la revendication 1, dans lequel la colophane hydrogénée est partiellement hydrogénée.

12. Procédé selon la revendication 1, dans lequel l'acide gras insaturé est un élément choisi dans le groupe constitué des acides gras contenant de 12 à 24 atomes de carbone et au moins une double liaison carbone-carbone, et de leurs mélanges.

13. Procédé selon la revendication 12, dans lequel l'acide gras insaturé est un élément choisi dans le groupe constitué de l'acide oléique, de l'acide linoléique, de l'acide linolénique, de l'acide oléostéarique, des acides gras d'huile de pin, des acides gras d'huile de lin, des acides gras d'huile de tung, des acides gras d'huile de carthame, des acides gras d'huile de graine de soja, et de leurs mélanges.

14. Procédé selon la revendication 1, dans lequel la colophane est un élément choisi dans le groupe constitué de la colophane d'huile de pin, de la colophane de bois, de la colophane, et de leurs mélanges.

15. Composition polymère vinylique acide gras-colophane selon la revendication 1.

16. Latex comprenant comme résine de support une solution aqueuse de la composition polymère vinylique acide gras-colophane selon la revendication 15.

17. Encre comprenant le latex selon la revendication 16.

18. Encre selon la revendication 17, dans laquelle l'encre comprend en outre un pigment.

19. Vernis comprenant la composition polymère vinylique acide gras-colophane selon la revendication 15.

20. Peinture comprenant le latex selon la revendication 16.

21. Peinture selon la revendication 20, dans laquelle la peinture comprend en outre un pigment.
